(19) Europäisches Patentamt
European Patent Office
Office européen des brevets

(11) **EP 3 403 741 B1**

(12) **EUROPÄISCHE PATENTSCHRIFT**

(45) Veröffentlichungstag und Bekanntmachung des Hinweises auf die Patenterteilung:
**29.09.2021 Patentblatt 2021/39**

(51) Int Cl.:
***B21J 15/10*** *(2006.01)*     ***B21J 15/30*** *(2006.01)*
***B23Q 1/01*** *(2006.01)*     ***B23K 11/31*** *(2006.01)*

(21) Anmeldenummer: **18171324.9**

(22) Anmeldetag: **08.05.2018**

(54) **C-FÖRMIGER WERKZEUGHALTER, KONSTRUKTIONSVERFAHREN UND HERSTELLUNGSVERFAHREN**

C-SHAPED TOOL HOLDER, METHOD OF CONSTRUCTION AND METHOD OF MANUFACTURING

PORTE-OUTIL EN FORME DE C, MÉTHODE DE CONSTRUCTION ET MÉTHODE DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2017 DE 102017110603**

(43) Veröffentlichungstag der Anmeldung:
**21.11.2018 Patentblatt 2018/47**

(73) Patentinhaber: **Böllhoff Verbindungstechnik GmbH**
**33649 Bielefeld (DE)**

(72) Erfinder: **REHLING, Stefan**
**31675 Bückeburg (DE)**

(74) Vertreter: **HWP Intellectual Property**
**Ridlerstraße 35**
**80339 München (DE)**

(56) Entgegenhaltungen:
**DE-A1-102013 000 387    DE-A1-102015 104 149**

- **DATABASE WPI Thomson Scientific, London, GB; AN 2009-f18486 XP002785457, "FRAME FOR SELF PIERCING APPARATUS", -& KR 2008 0110364 A (SUNG WOO KITECH CO LTD) 18. Dezember 2008 (2008-12-18)**
- **DATABASE WPI Thomson Scientific, London, GB; AN 2014-E53428 XP002785458, "SELF PIERCING RIVET APPARATUS", -& KR 2014 0026817 A (UNIV CHUNGBUK NAT IND ACADEMIC COOP FOUN) 6. März 2014 (2014-03-06)**

EP 3 403 741 B1

## Beschreibung

### 1. Gebiet der Erfindung

Vorliegende Erfindung betrifft einen C-förmigen Werkzeughalter bestehend aus einer integralen Rahmenstruktur, insbesondere einen C-Rahmen, sowie ein Fügegerät, insbesondere ein Nietsetzgerät, welches unter Verwendung des oben genannten C-Rahmens aufgebaut ist. Ein Werkzeughalter gemäß dem Oberbegriff von Anspruch 1 ist beispielsweise aus der KR 20080110364 A bekannt.

### 2. Hintergrund der Erfindung

In bekannten füge- oder umformtechnischen Anwendungen müssen die im Press-, Niet- oder Stanzprozess entstehenden Kräfte durch eine geeignete Rahmenkonstruktion aufgenommen werden. Vielfach werden hierfür bekannte C-Rahmenkonstruktionen verwendet. Insbesondere bei automatisierten Prozessen, in denen derartige C-Rahmenwerkzeuge von Robotern geführt werden, spielt das Gewicht des C-Rahmens eine große Rolle.

Ein aus dem Stand der Technik bekannter C-Rahmen ist in DE 699 11 040 T2 beschrieben. Derartige Leichtbau-C-Rahmen sind Konstruktionen aus in Knotenpunkten fest verbundenen Balkenelementen (Fachwerkrahmen). Diese sind in einer Dreiecksstruktur ausgebildet. Um die Materialspannungen unter Last in den Knotenpunkten zu optimieren, werden die Balkenelemente in den Knotenpunkten durch Kreisbögen verrundet.

Fachwerkrahmen besitzen im Vergleich zu konventionellen kompakten Strukturen bzw. C-Rahmen aus Vollmaterial gute Gewichtseigenschaften. Jedoch ist ihre Steifigkeit gegen Aufbiegung geringer. Dies führt für einen Fachwerkrahmen mit gleicher Belastung und gleicher Ausladung der Schenkel wie bei einem konventionellen C-Rahmen zu einem größeren Aufbiegungsweg wie auch zu einem größeren Aufbiegungswinkel.

Ein zu großer Aufbiegungswinkel ist aber bei vielen Fügeverfahren unerwünscht, da er die eingesetzte Antriebstechnik einer hohen Querkraftbeanspruchung aussetzt. Um den Aufbiegungswinkel beim Fachwerkrahmen zu reduzieren, kann die Struktur durch geschickte Einleitung der Prozesskraft außerhalb der Fachwerkknotenpunkte dazu gebracht werden, sich derart zu verformen, dass die gegenüberliegenden, äußeren Schenkelflächen im verformten Zustand annähernd parallel zueinander bleiben, wie in obigem Dokument des Standes der Technik beschrieben ist.

Aufgrund der dennoch hohen Gewichtsbelastung zum Beispiel der Roboter bei bekannten Setzgeräten und C-Rahmen ist der Bedarf an gewichtsreduzierten und damit mobileren C-förmigen Werkzeughaltern groß. Zudem steigt bei gleichbleibender oder verringerter Größe der C-Rahmen der Anspruch an deren Steifigkeit und Belastbarkeit. Es ist daher die Aufgabe vorliegender Erfindung, einen gegenüber dem Stand der Technik leistungsfähigeren C-förmigen Werkzeughalter bereitzustellen.

### 3. Zusammenfassung der Erfindung

Die obige Aufgabe wird durch einen C-förmigen Werkzeughalter gemäß dem unabhängigen Anspruch 1 sowie durch ein Fügegerät gemäß dem unabhängigen Anspruch 9 gelöst. Vorteilhafte Ausführungsformen der vorliegenden Erfindung gehen aus den abhängigen Patentansprüchen sowie der folgenden Beschreibung und den begleitenden Zeichnungen hervor. Des Weiteren beschreibt vorliegende Erfindung ein Konstruktionsverfahren für den erfindungsgemäßen C-förmigen Werkzeughalter im unabhängigen Anspruch 10.

Der C-förmige Werkzeughalter besteht aus einer integralen Rahmenstruktur, die durch einen inneren und einen äußeren jeweils C-förmigen Rand begrenzt ist. Die C-förmigen Ränder sind über mindestens fünf in die Rahmenstruktur integrierte Rahmenvielecke, insbesondere Dreiecke, Vierecke und Fünfecke, aufgebaut und miteinander verbunden, wobei jeweils eine Innenseite der einzelnen Rahmenvielecke eine krümmungsstetig umlaufende Verbindungsfläche entlang der Seiten des jeweiligen Rahmenvielecks darstellt und der innere und der äußere C-förmige Rand nach außen jeweils durch eine krümmungsstetig verlaufende Randfläche begrenzt ist.

Der erfindungsgemäße C-förmige Werkzeughalter, der allgemein auch als C-Rahmen in Kombination mit beispielsweise Nietsetzgeräten oder ähnlichen Fügewerkzeugen bezeichnet wird, wird durch einen integralen, also einen nicht aus Einzelteilen zusammengesetzten, Fachwerkrahmen gebildet. Dieser Fachwerkrahmen, der aus einer Vielzahl von Stabwerken besteht, wird bevorzugt aus einem Grundmaterialblock herausgearbeitet, wie beispielsweise aus einem Metallblock, wie Stahl oder Aluminium, oder einem hybriden faserverstärkten Kunststoff (FVK) oder einem Faser-Kunststoff-Verbund (FKV) oder einem Metall-Faserverbundkunststoff-Hybride, herausgefräst.

Die Fachwerkstruktur ergibt sich aus der Anordnung einer Mehrzahl von Rahmenvielecken im Inneren des C-förmigen Werkzeughalters, welches durch den inneren und den äußeren C-förmigen Rand des C förmigen Werkzeughalters eingeschlossen ist. Dabei werden der innere und der äußere Rand durch die miteinander kombinierten integrierten Rahmenvielecke aufgespannt und miteinander verbunden. Den inneren und den äußeren C-förmigen Rand zeichnet dabei aus, dass die nach außen zeigenden Randflächen, d.h. die vom eingeschlossenen Inneren des C-förmigen Werkzeughalters nach außen zeigenden Randflächen, krümmungsstetig verlaufen. Vorzugsweise erstreckt sich der krümmungsstetige Verlauf nicht auf die freien Enden des C-förmigen Werkzeughalters. Dieser krümmungsstetige Verlauf gilt auch für die umlaufenden Innenflächen der Rahmenvielecke, die jeweils die Leerräume in den Rahmenvielecken einschließen. Aufgrund dieses realisierten krümmungsstetigen Verlaufs der Flächen des C-förmigen Werkzeughalters werden mechanische Spannungsbelastungen der einzelnen Balkenelemente innerhalb des C-förmigen Werkzeughalters gerade in der Nähe der Knotenpunkte oder Kreuzungen optimal über einen Bereich der Gabelung, also eines Übergangsbereichs zu anderen Balkenelementen, verteilt. Zudem erzielt dieser krümmungsstetige Verlauf der Flächen eine Reduktion von mechanischen Spannungsspitzen in diesen Übergangsbereichen, die sonst nur mithilfe von Verrundungen zwischen aneinander angrenzenden Balkenelementen vermindert worden sind.

Gemäß einer bevorzugten Ausführungsform vorliegender Erfindung besteht die C-Form des Werkzeughalters aus einem ersten und einem zweiten einander gegenüberliegend angeordneten Schenkel und einem Verbindungsschenkel, wobei der Verbindungsschenkel den ersten und den zweiten Schenkel zur Ausbildung einer C-Form miteinander verbindet. Gemäß einer bevorzugten Ausfuhrungsform vorliegender Erfindung besteht der Verbindungsschenkel aus mindestens zwei Rahmendreiecken und einem Rahmenvieleck. Der erste und der zweite Schenkel, die einander gegenüberliegend angeordnet sind, bestehen jeweils aus mindestens einem Rahmenvieleck.

Je nach Anwendungsfall des C-förmigen Werkzeughalters können der erste und der zweite Schenkel sowie der diese verbindende Verbindungsschenkel unterschiedlich dimensioniert sein. Des Weiteren wird mithilfe der Anzahl der zum Aufbau der einzelnen Schenkel verwendeten integrierten Rahmenvielecke berücksichtigt, welchen Belastungen der Werkzeughalter standhalten muss. Zudem wird durch die Konstruktion der Schenkel aus den Rahmenvielecken eine an den Anwendungsfall angepasste Flexibilität bzw. Steifigkeit des Werkzeughalters realisiert.

Als eine vorteilhafte und bevorzugte Grundkonstruktion wird der Verbindungsschenkel aus einem zentralen Rahmenvieleck, insbesondere einem Rahmenviereck, und zwei daran einander gegenüberliegend angrenzende Rahmendreiecke aufgebaut. Diese Konstruktion des Verbindungsschenkels gewährleistet einen ausreichenden Öffnungsraum des C-förmigen Werkzeughalters. Zudem wird ein entsprechender Anbindungsraum bereitgestellt, um den ersten und zweiten Schenkel ausgehend von dem Verbindungsschenkel bereitzustellen. In Abhängigkeit von der erforderlichen Länge der ersten und zweiten Schenkel bestehen diese zumindest aus einem Rahmenvieleck, insbesondere aus einem Rahmenfünfeck oder einem Rahmenviereck. In gleicher Weise ist es ebenfalls bevorzugt, den ersten und den zweiten Schenkel aus einem Rahmenviereck in Kombination mit einem Rahmendreieck oder aus einem Rahmenfünfeck in Kombination mit einem Rahmendreieck bereitzustellen.

Gemäß einer weiteren bevorzugten Ausführungsform des erfindungsgemäßen Werkzeughalters setzt sich der Verbindungsschenkel aus mindestens vier Rahmendreiecken und einem Rahmenviereck zusammen, während der erste und der zweite Schenkel jeweils aus mindestens einem Rahmenviereck oder einem Rahmenfünfeck aufgebaut ist.

Gemäß einer weiteren bevorzugten Ausführungsform des erfindungsgemäßen Werkzeughalters schließen die Rahmenvielecke jeweils eine Fläche ein, die von einer Balkenstruktur mit einer Tiefe und einer Breite umgeben ist. Die Tiefe der Balkenstruktur ist orthogonal zur Fläche und die Breite ist parallel zur Fläche definiert. Zudem sind die gegenüber voneinander angeordneten, um die Breite der Balkenstruktur voneinander beabstandeten und parallel zur Tiefe verlaufenden Tiefenflächen der Rahmenvielecke krümmungsstetig verlaufende Rahmenflächen.

Vorzugsweise bestehen die Rahmenvielecke aus einer Mehrzahl von Balken, die durch die Tiefe und die Breite definiert sind. Die Anzahl der miteinander verbundenen Balken entscheidet darüber, ob es sich um ein Rahmendreieck, ein Rahmenviereck oder ein Rahmenfünfeck handelt. Somit weist bevorzugt ein Rahmenvieleck bestehend aus beispielsweise vier Balkenelementen zwei gleich große um die Tiefe voneinander beanstandete Flächen auf. Diese beiden Flächen werden nach außen und in Richtung des freien Innenraums, also nach innen, durch krümmungsstetig verlaufende Rahmenflächen begrenzt. Gerade der krümmungsstetige Verlauf dieser Rahmenflächen sorgt für die bereits oben angesprochene mechanische Spannungsreduktion und Spannungseinleitung in die Rahmenstruktur, um nachteilige mechanische Spannungsspitzen, beispielsweise in Knotenpunkten von Balkenelementen, zu vermeiden.

Weiterhin bevorzugt bilden die Tiefenflächen des Werkzeughalters in Tiefenrichtung betrachtet eine innere und eine äußere Konturlinie pro Rahmenvieleck. Diese innere und äußere Konturlinie ist jeweils als eine periodische NURBS-Kurve 4. Ordnung auf Grundlage einer Mehrzahl von erzeugten Knotenpunkten zumindest in Eckbereichen des jeweiligen Rahmenvielecks definiert.

Zur Konstruktion des erfindungsgemäßen C-förmigen integralen Werkzeughalters wird bevorzugt auf NURBS-Kurven zurückgegriffen. Die Abkürzung NURBS-Kurven bezeichnet dabei die bekannten non-uniform rational B-Splines-Kurven. Die auf dieser mathematischen Grundlage definierten Kurven oder Flächen sind Bestandteil bekannter CAD-Systeme zur Modellierung beliebiger Formen. Dieser mathematische Ansatz stellt die Möglichkeit zur Verfügung, unter Beachtung beispielsweise von materialspezifischen Randbedingungen oder von durch mechanische Belastungen definierten Randbedingungen, Formoptimierungen vorzunehmen, sodass vorzugsweise neben einer Gewichtsreduktion auch eine Stabilitätsoptimierung des Werkzeughalters im Hinblick auf den jeweiligen Anwendungsfall möglich ist. Dies wird bevorzugt durch den krümmungsstetigen Verlauf der genutzten Rahmenflächen sowie durch die gezielte Verschiebung von Knotenpunkten auf Offsetpolygonen (siehe unten) erzielt.

Gemäß einer weiteren bevorzugten Ausführungsform vorliegende Erfindung weist der Werkzeughalter am ersten und am zweiten Schenkel jeweils ein freies Ende auf, wobei an mindestens einem Ende eine Antriebseinheit oder eine Befestigungseinheit integral oder modular vorgesehen ist. Mithilfe der bevorzugt durch den ersten und den zweiten Schenkel bereitgestellten freien Enden ist der Werkzeughalter beispielsweise für ein Nietsetzgerät oder ein anderes Fügewerkzeug nutzbar. Während an dem einen freien Ende die Antriebseinheit befestigt wird, wird beispielsweise an dem gegenüberliegenden freien Ende eine Matrize oder ein entsprechendes Gegenlager angeordnet.

Gemäß weiterer bevorzugter Ausführungsform vorliegender Erfindung besteht der oben beschriebene Werkzeughalter aus einer integralen Struktur, die aus den folgenden Materialien aufgebaut ist: einem Metall, insbesondere Stahl oder Aluminium, oder einem hybriden faserverstärkten Kunststoff (FVK) oder einem Faser-Kunststoff-Verbund (FKV) oder Metall-Faserverbundkunststoff-Hybride.

Ein Faser-Kunststoff-Verbund (FKV) (auch: faserverstärkter Kunststoff oder Faserverbundkunststoff, FVK) ist ein Werkstoff bestehend aus Verstärkungsfasern und einer Kunststoffmatrix. Die Matrix umgibt die Fasern, die durch adhäsive Wechselwirkungen an die Matrix gebunden sind. Durch die Verwendung von Faserwerkstoffen haben Faser-Kunststoff-Verbunde ein richtungsabhängiges Elastizitätsverhalten.

Vorliegende Erfindung umfasst zudem ein Fügegerät, insbesondere ein Nietsetzgerät, welches einen C-förmigen Werkzeughalter gemäß einer der oben beschriebenen Ausführungsformen in Kombination mit einer Antriebseinheit und einem Gegenlager, insbesondere eine Matrize, aufweist.

Des Weiteren ist ein Konstruktionsverfahren eines C-förmigen Werkzeughalters mit einer integralen Rahmenstruktur offenbart. Diese integrale Rahmenstruktur ist durch den inneren und den äußeren jeweils C-förmigen Rand begrenzt. Das Konstruktionsverfahren weist die folgenden Schritte auf: Definieren eines ersten und eines zweiten Schenkels, die einander gegenüberliegend angeordnet über einen Verbindungsschenkel miteinander verbunden sind, um eine C-förmige Struktur zu bilden, Bilden des ersten und des zweiten Schenkels sowie des Verbindungsschenkels aus mindestens fünf, vorzugsweise sieben, Rahmenvielecken, die miteinander verbunden sind, und Ausbilden eines C-förmigen äußeren Rands und eines C-förmigen inneren Rands des Werkzeughalters bestehend aus den miteinander verbundenen Rahmenvielecken mit einer krümmungsstetig verlaufenden C-förmigen äußeren Randfläche und einer krümmungsstetig verlaufenden C-förmigen inneren Randfläche sowie Ausbilden der einzelnen Rahmenvielecke jeweils mit einer krümmungsstetig verlaufenden inneren Rahmenfläche.

Das obige Konstruktionsverfahren basiert auf dem Ansatz, einen zusammenhängenden und nicht aus einzelnen Rahmenelementen zusammengesetzten C-förmigen Werkzeughalter zu konstruieren. Das Ergebnis dieses Konstruktionsverfahrens, welches vorzugsweise in Form elektronischer Daten vorliegt, kann dann an eine CNC-Maschine weitergegeben werden, um aus einem massiven Grundkörper, vorzugsweise aus Stahl, diesen integralen C-förmigen Werkzeughalter herauszuarbeiten, beispielsweise durch Fräsen und ähnliche spannende Verfahren oder auch durch Schneidverfahren, wie das Laserschweißen.

Um die Grundstruktur des C-förmigen Werkzeughalters bereitzustellen, wird dessen Struktur bestehend aus zwei einander gegenüberliegenden Schenkeln, die durch einen Verbindungsschenkel miteinander verbunden sind, durch mindestens fünf Rahmenvielecke aufgespannt. Ein Rahmenvieleck bezeichnet eine Balkenkonstruktion mit mindestens drei durch diese Balkenelemente definierte Seiten, die an drei Eckpunkten integral miteinander verbunden sind. Entsprechend sind in gleicher Weise Vierecke, Fünfecke, Sechsecke konstruierbar, um aus diesen Rahmenvielecken den ersten und zweiten Schenkel und den Verbindungsschenkel aufzubauen. Des Weiteren zeichnet diesen C-förmigen Werkzeughalter aus, dass die Gesamtheit der genutzten Rahmenvielecke integral miteinander verbunden sind, sodass sie im Rahmen der Herstellung des C-förmigen Werkzeughalters weder als modulare Einzelteile vorliegen noch über geeignete Verbindungsmittel oder Verbindungsverfahren miteinander verbunden werden müssen, um den Werkzeughalter zu bilden.

In einer weiteren Ausgestaltung umfasst das Konstruktionsverfahren die weiteren Schritte: Definieren jedes Rahmenvielecks in einer gemeinsamen Konstruktionsebene als Rahmenpolygon und Definieren einer Offsetkontur innerhalb der Konstruktionsebene, die beidseitig von dem Rahmenpolygon beanstandet ist, sodass die Offsetkontur eine Breite des Rahmenvielecks innerhalb der Konstruktionsebene bestimmt und sich aus zwei Rahmenpolygonen zusammensetzt.

Bevorzugt wird der C-förmige Werkzeughalter in einer gemeinsamen Konstruktionsebene entworfen. Innerhalb dieser Konstruktionsebene bilden die miteinander in der integralen Rahmenstruktur vorzusehenden Rahmenvielecke jeweils untereinander verbundene Rahmenpolygone. Ein Rahmenpolygon ist ein Vieleck mit mindestens drei Ecken. Je nach Position des Rahmenpolygons im Werkzeughalter kann dieses Rahmenpolygon beliebig viele Ecken aufweisen. Die Mehrzahl der miteinander verbundenen Rahmenpolygone innerhalb der Konstruktionsebene bilden die Grundform des späteren Werkzeughalters in Form einer Strichkonstruktion. Die einzelnen Striche der Rahmenpolygone werden durch parallel zu ihnen verlaufende Balkenelemente weitergebildet. Diese Balkenelemente mit ihrer Dimension im Hinblick auf Breite und Tiefe berücksichtigen vorzugsweise die mechanischen Randbedingungen des in der Praxis einzusetzenden Werkzeughalters. Das bedeutet, dass die Balkenelemente unter Berücksichtigung späterer mechanischer Belastungen und Materialgestaltungen des Werkzeughalters ausgebildet werden.

Diese Balkenstruktur, die zunächst bevorzugt ebenfalls auf eine Darstellung in der Konstruktionsebene reduziert wird, wird mithilfe der oben genannten Offsetkontur dargestellt. Da in der Konstruktionsebene nur eine einseitige Draufsicht auf die gewählten Balkenelemente möglich ist, ergibt sich die Breite der einzelnen Balkenelemente bzw. des Rahmenvielecks innerhalb der Konstruktionsebene durch zwei Rahmenpolygone, die das grundlegende Rahmenvieleck innerhalb des zu konstruierenden Werkzeughalters umgeben. Somit spannt bevorzugt der Zwischenraum zwischen zwei einander gegenüberliegend angeordneten Rahmenpolygonen und dem dazwischen liegenden Rahmenvieleck die Offsetkontur oder die Konstruktion des Rahmenvielecks aus Balkenelementen auf.

Des Weiteren ist bevorzugt die Breite der Offsetkontur entlang der einzelnen Seiten des Rahmenpolygons gleich oder verschieden. Entsprechend den erwarteten und/oder berechneten mechanischen Belastungen des Werkzeughalters in der späteren praktischen Anwendung werden die einzelnen Balkenelemente der Rahmenpolygone bzw. der Rahmenvielecke dimensioniert. Dies eröffnet die Möglichkeit, dass ein einzelnes Rahmenvieleck gerade nicht aus gleich dicken Balkenelementen aufgebaut sein muss. Vielmehr werden durch unterschiedlich dicke Balkenelemente Belastungs- und Verformungszustände des Werkzeughalters berücksichtigt und entsprechend eingestellt. Daraus folgt, dass die Offsetkontur der einzelnen Rahmenvielecke zunächst eine konstante Breite aufweist. Im Vergleich zueinander kann die Breite unterschiedlicher Seiten eines Rahmenvielecks unterschiedlich oder gleich ausgebildet sein.

Weiterhin bevorzugt weist das Konstruktionsverfahren die zusätzlichen folgenden Schritte auf: Erzeugen von Knotenpunkten auf den Ecken und auf den Seitenmitten der Offsetpolygone und Erzeugen von periodischen NURBS-Kurven 4. Ordnung bestehend aus Polynomen 3. Grades auf Grundlage der erzeugten Knotenpunkte. Basierend auf bekannten mathematischen Prinzipien werden Knotenpunkte auf den Ecken und auf den Seitenmitten der einzelnen linearen Seiten der Offsetpolygone definiert. Diese Knotenpunkte bilden Bezugspunkte für periodische NURBS-Kurven 4. Ordnung. Die Abkürzung NURBS bedeutet in diesem Zusammenhang non-uniform rational B-Splines-Kurven. Die mathematischen Bestandteile und Anwendungsmöglichkeiten sind gängige Konstruktionselemente von beispielsweise CAD-Systemen oder ähnlichen softwaregestützten Konstruktionsprogrammen. Entsprechend wird ein derartiges softwaregestütztes NURBS-Modul zur praktischen Realisierung des integralen C-förmigen Werkzeughalters angewandt. Diese NURBS-Kurven durch die Knotenpunkte optimieren die vorgegebene Offsetkontur derart, dass die integrale Rahmenstruktur an die mechanischen Randbedingungen angepasst wird.

Das obige Konstruktionsverfahren umfasst zudem bevorzugt das rechnergestützte Umsetzen des Konstruktionsverfahrens, vorzugsweise mit einem CAD Programm, und das Erstellen eines rechnergestützten Datensatzes zur Herstellung des Werkzeughalters. Dieser Datensatz ist in bekannter Weise auf Bearbeitungsvorrichtungen bzw. deren Steuereinheiten übertragbar, um den Werkzeughalter integral aus einem Materialblock herstellen zu können.

Das erfindungsgemäße Herstellungsverfahren einen C-förmigen Werkzeughalter mit einer integralen Rahmenstruktur weist die folgenden Schritte auf: Empfangen eines rechnergestützten Datensatzes für den herzustellenden C-förmigen Werkzeughalter aus einem CAD-System, vorzugsweise als Ergebnis des oben beschriebenen bevorzugten Konstruktionsverfahrens, Weiterleiten des rechnergestützten Datensatzes an eine Produktionsmaschine, vorzugsweise ein CNC-Maschine oder ähnliches, und Herstellen und Nachbearbeiten des C-förmigen Werkzeughalters gemäß dem rechnergestützten Datensatz.

Nachdem der integrale Werkzeughalter vorliegt werden ebenfalls seine Enden mit einer Antriebseinheit, vorzugsweise ein hydraulischer oder ein elektromotorischer angetriebener Stempel, und einem passenden Gegenlager, wie eine Matrize oder dergleichen, ausgestattet.

4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:

Figur 1      eine schematische Seitenansicht einer bevorzugten Ausführungsform des erfindungsgemäßen C-förmigen Werkzeughalters,

Figur 2      eine Ausschnittsvergrößerung aus dem Werkzeughalter gemäß Figur 1, in der krümmungsstetige Flächenverläufe mit Kreisbogen-Geraden-Verläufen verglichen werden,

Figur 3      die vergrößerte Ansicht aus Figur 2, in der nur die krümmungsstetig verlaufenden Flächen gezeigt sind,

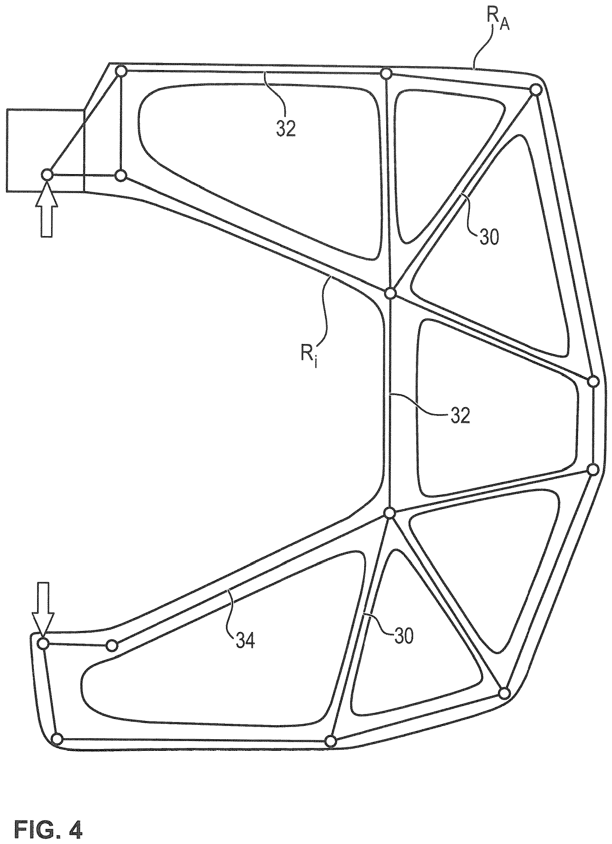

Figur 4      eine schematische Darstellung einer bevorzugten Ausführungsform einer Konstruktion des Werkzeughalters gemäß Figur 1 aus einer Mehrzahl in die Rahmenstruktur integrierter Rahmenvielecke jeweils als Rahmenpolygon,

Figur 5      eine bevorzugte Zusammenstellung der Rahmenvielecke gemäß Figur 4 aus mehreren Dreiecken, Vierecken und zumindest einem Fünfeck zur Konstruktion des bevorzugten ersten und zweiten Schenkels, die über einen bevorzugten Verbindungsschenkel miteinander verbunden sind,

Figur 6a-d      eine bevorzugte Konstruktion eines Rahmenvielecks aus dem Werkzeughalter gemäß Figur 1 basierend auf einem Rahmenpolygon und einer dieses Rahmenpolygon umgebenden Offsetkontur mit bevorzugten krümmungsstetig verlaufenden Seitenflächen,

Figur 7      eine bevorzugte Ausführungsform eines Rahmendreiecks konstruiert aus einem Rahmenpolygon und einer umgebenden Offsetkontur mit krümmungsstetig verlaufenden Seitenflächen, die durch periodische NURBS-Kurven 4. Ordnung auf Grundlage einer Mehrzahl von erzeugten Knotenpunkten in den Eckbereichen und auf den Seitenmitten der Offsetpolygone definiert sind,

Figur 8      eine bevorzugte Ausführungsform eines dreieckigen Rahmenpolygons,

Figur 9      eine bevorzugte Ausführungsform der Veranschaulichung einer Verformung des Rahmenpolygons aus Figur 8 mit Offsetkontur,

Figur 10      eine bevorzugte Ausführungsform eines Rahmenpolygons in Form eines Vierecks,

Figur 11      eine bevorzugte schematische Veranschaulichung einer Verformung des Rahmenpolygons gemäß Figur 10 mit umgebender Offsetkontur,

Figur 12      eine weitere bevorzugte schematische Veranschaulichung einer Verformung eines Rahmenpolygons in Form eines Fünfecks mit Offsetkontur,

Figur 13      eine schematische Veranschaulichung einer bevorzugten Verformung des Werkzeughalters aus Figur 1 und

Figur 14a, b      ein bevorzugter Vergleich von mechanischen Spannungen an einem Knotenpunkt (A) mit krümmungsstetig verlaufenden Verbindungsflächen zwischen benachbarten Balkenelementen und (B) mit Kreisbögen-Geraden-Übergängen, also tangentenstetigen Übergängen, zwischen benachbarten und am Knotenpunkt zusammentreffenden Balkenelementen.

5. Detaillierte Beschreibung der bevorzugten Ausführungsformen

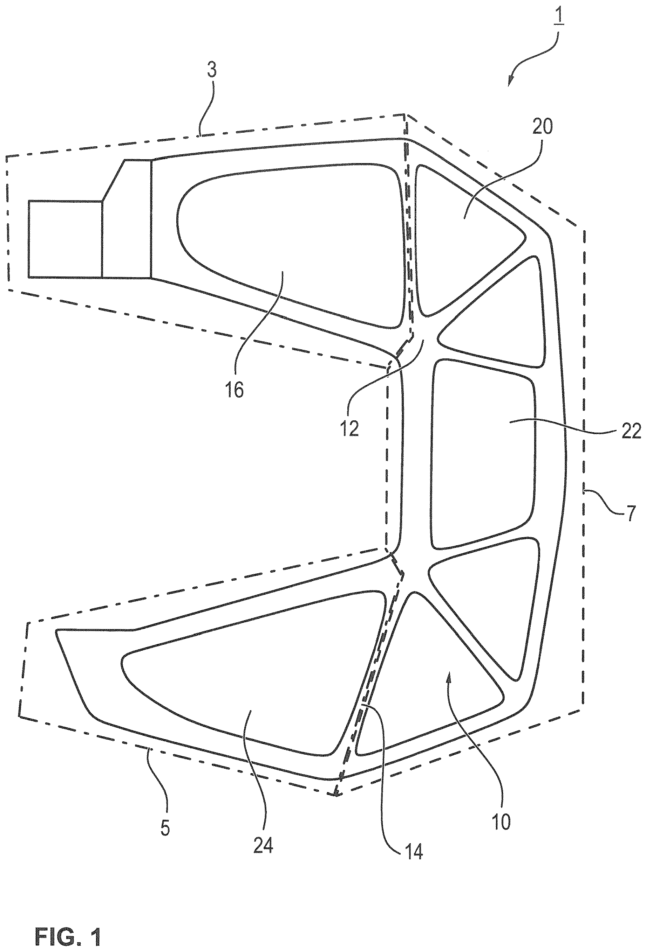

Vorliegende Erfindung offenbart einen C-förmigen Werkzeughalter 1, wie er gemäß einer bevorzugten Ausführungsform in Figur 1 in einer schematischen Seitenansicht gezeigt ist. C-förmige Werkzeughalter 1 sind im Hinblick auf ihre Anwendung, beispielsweise in Nietsetzgeräten oder Clinchwerkzeugen, allgemein bekannt. Sie bestehen aus einem ersten 3 und einem zweiten Schenkel 5 (siehe Strich-Punkt-Linie in Figur 1), die in Figur 1 horizontal verlaufen und über einen Verbindungsschenkel 7 (gestrichelte Linie in Figur 1) miteinander verbunden sind.

Der erste 3 und der zweite Schenkel 5 sowie der Verbindungsschenkel 7 bestehen aus einer integralen Rahmenstruktur 10. Sie sind innerhalb dieser Rahmenstruktur 10 integral miteinander ausgebildet und liegen nicht als verbundene oder verbindbare Schenkelmodule vor. Integral bedeutet in diesem Zusammenhang, dass die Rahmenstruktur 10 ein zusammenhängendes Ganzes bildet, welches zerstörungsfrei nicht in seine Einzelteile zerlegbar ist. Entsprechend sind die Schenkel 3, 5, 7 nicht über kraft-, reib- oder stoffschlüssige Verbindungselemente miteinander verbunden.

Die integrale Rahmenstruktur 10 des Werkzeughalters 1 wird durch eine Mehrzahl über Kreuzungen 12 miteinander verbundene Balkenelemente 14 gebildet. Eine Mehrzahl von Balkenelementen 14 schließt jeweils einen Freiraum 16 ein und bildet darüber Rahmendreiecke 20, Rahmenvierecke 22, Rahmenfünfecke 24 sowie Rahmenvielecke mit mehr als fünf Ecken (nicht gezeigt). Diese werden unter dem Begriff Rahmenvielecke zusammengefasst und weisen beliebig viele, aber mindestens 3, Ecken auf.

Zur optimalen Steuerung des Verformungsverhaltens des Werkzeughalters 1 wird die integrale Rahmenstruktur 10 aus einer Kombination aus benachbarten Rahmenvielecken 20, 22, 24 zusammengesetzt. Es entsteht ein Stabwerk. Die Rahmenvielecke haben bevorzugt 3, 4 oder 5 Eckpunkte. Im ersten 3 und zweiten Schenkel 5, die auch als Ausleger bezeichnet werden, werden zur Steuerung des Aufbiegungsverhaltens des Werkzeughalters 1 bevorzugt Rahmenvierecke oder Rahmenfünfecke allein oder in Kombination mit weiteren Rahmenvielecken eingesetzt. Im Verbindungsschenkel 7 wird bevorzugt ein zentrales Rahmenviereck 22 verwendet. Dieses wird gemäß unterschiedlicher bevorzugter Ausführungsformen vorliegender Erfindung mit einander gegenüberliegend angeordneten Rahmendreiecken 20, bevorzugt zwei oder vier (siehe Figur 1), kombiniert.

Bei dieser Konstruktion des Werkzeughalters 1 entstehen bei seiner praktischen Anwendung in den angrenzenden Balkenelementen 14 der Rahmenstruktur 10 erhebliche mechanische Spannungsbelastungen. Um diesen entgegenzuwirken, werden im Stand der Technik entsprechend Balkensquerschnitte der Balkenelemente 18 vergrößert. Dies geschieht entweder durch individuelle Verbreiterung eines verwendeten Balkens oder pauschal durch Erhöhung einer Plattendicke, aus der ein C-Rahmen gefertigt wird.

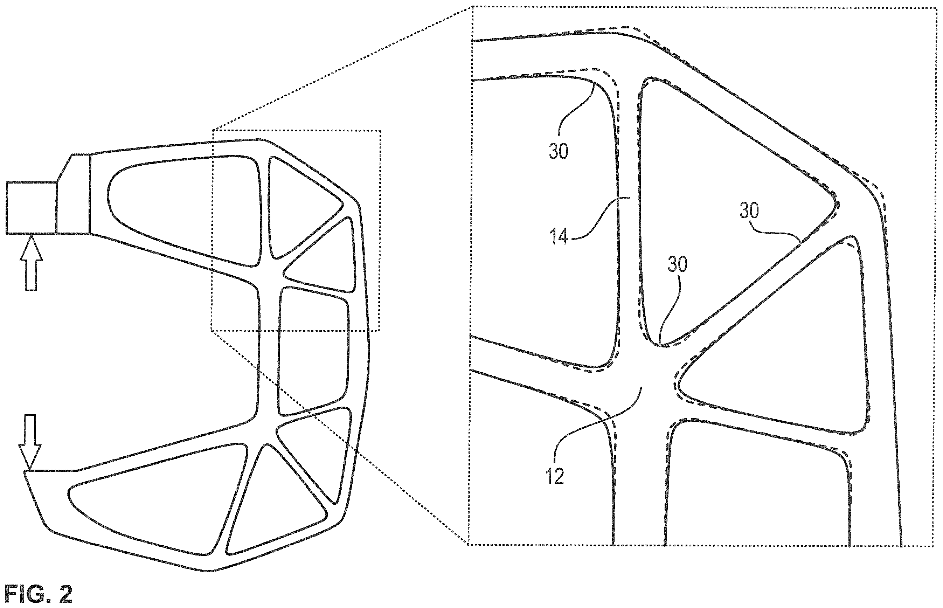

Figur 2 zeigt eine Ausschnittsvergrößerung aus der Rahmenstruktur 10. Die Balkenelemente 14 sind an den Kreuzungen 12 über bevorzugt krümmungsstetig verlaufende Verbindungsflächen 30 miteinander verbunden (siehe durchgezogene Linien in Figur 2). Erfindungsgemäß bevorzugt werden die Verbindungsflächen 30 mithilfe von periodischen, krümmungsstetig verlaufenden NURBS-Kurven 4. Ordnung mit veränderlicher Krümmung bestimmt. Basierend auf dieser Formgebung der Übergangsbereiche zwischen Balkenelementen 14 an Kreuzungen 12 werden auftretende mechanische Spannungen in der Nähe der Kreuzungen 12 über den Bereich der Kreuzung 12 optimal verteilt. Zudem werden auf diese Weise in diesem Bereich nachteilige mechanische Spannungsspitzen reduziert oder vermieden.

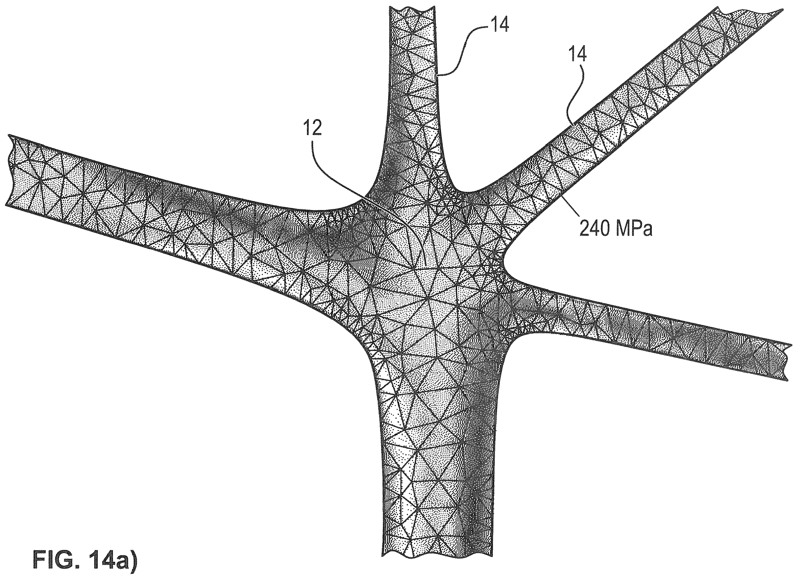

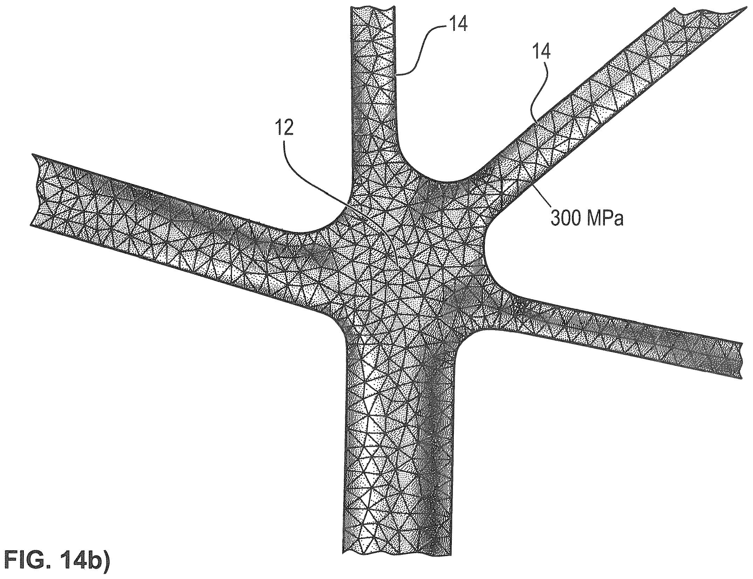

Es ist ebenfalls denkbar, benachbarte Balkenelemente 14 in Kreuzungen 12 über Verrundungen angrenzender Balkenelementkanten (siehe gestrichelte Linie in Figur 2) miteinander zu verbinden. Eine Verrundung stellt ein Kurvensegment mit konstanter Krümmung dar, welches tangentenstetig in die geraden Balkenelementkanten übergeht. Dabei entstehen in Übergangsbereichen zwischen dem Kurvensegment und geraden Balkenelementkanten Bereiche nicht optimaler mechanischer Spannungsverteilungen. In diesem Zusammenhang zeigt Figur 14 einen Vergleich von auftretenden mechanischen Spannungen an einer Kreuzung 12 mit tangentenstetigen Übergangsbereichen zwischen Balkenelementen 14 (siehe Fig. 14b) und der gleichen Kreuzung 12 mit krümmungsstetigen Übergangsbereichen (siehe Figur 14a). Die mechanischen Spannungswerte zeigen, dass die Kreuzung 12 mit tangentenstetigen Übergangsbereichen zwischen den Balkenelementen 14 stärkeren mechanischen Belastungen ausgesetzt ist als die Kreuzung 12 mit krümmungsstetigen Übergangsbereichen.

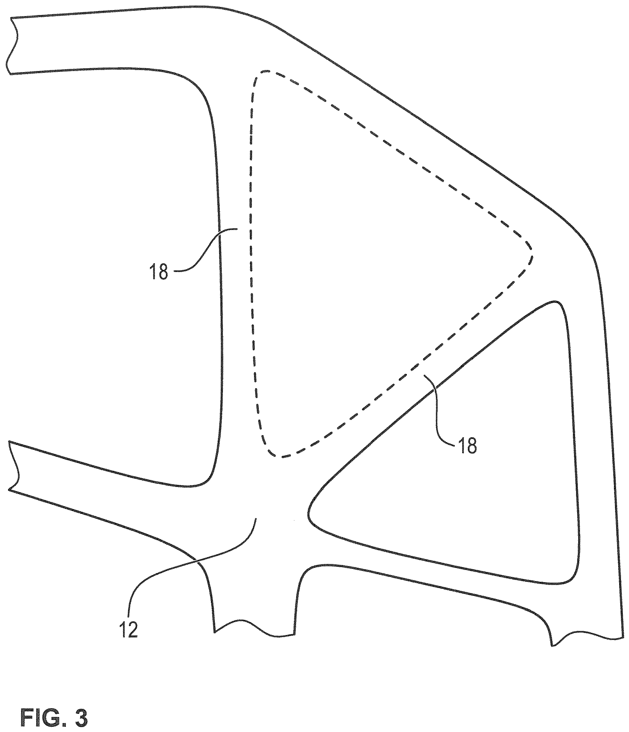

Figur 3 zeigt noch einmal die Ausschnittsvergrößerung aus Figur 2 aber nur mit krümmungsstetig verlaufenden Verbindungen zwischen benachbarten Balkenelementen 14 im Bereich von Kreuzungen 12 (hier gestrichelt dargestellt).

Zur Konstruktion des Werkzeughalters 1 werden der Verbindungsschenkel 7 aus mindestens zwei Rahmendreiecken 20 und einem Rahmenvieleck 22; 24 und dessen erster 3 und dessen zweiter Schenkel 5 jeweils aus mindestens einem Rahmenvieleck 22; 24 aufgebaut. Ebenfalls bevorzugt ist der Aufbau des Verbindungsschenkels 7 aus mindestens vier Rahmendreiecken 20 und einem Rahmenviereck 22 und des ersten 3 und des zweiten Schenkels 5 jeweils aus mindestens einem Rahmenviereck 22 oder einem Rahmenfünfeck 24.

Für eine vereinfachte Darstellung des Aufbaus des Werkzeughalters 1 wird dieser in der Zeichnungsebene der begleitenden Zeichnungen betrachtet. Entsprechend liegt die in einem Rahmenvieleck 20, 22, 24 eingeschlossene Fläche des Freiraums 16 in der Zeichnungsebene. Die Balkenelemente 14 weisen eine Breite $B_B$ und eine Tiefe $T_B$ auf. Die Breite $B_B$ liegt in der Zeichnungsebene und die Tiefe $T_B$ erstreckt sich senkrecht in die Zeichnungsebene hinein oder aus dieser heraus. Entsprechend wird der Freiraum 16 in einem Rahmenvieleck 20, 22, 24 durch eine bevorzugt krümmungsstetig umlaufende Tiefenfläche umgeben, die senkrecht zur Zeichnungsebene angeordnet ist.

Unter der bevorzugten Annahme, dass der Werkzeughalter 1 eine konstante Tiefe senkrecht zur Zeichnungsebene aufweist, werden die Schenkel 3, 5, 7 aus einer Mehrzahl von Rahmenvielecken 20, 22, 24 aufgebaut. Diese Rahmenvielecke 20, 22, 24 bilden den äußeren C-förmigen Rand $R_a$ und den inneren C-förmigen Rand $R_i$. Der äußere $R_a$ und der innere Rand $R_i$ werden durch Balkenelemente 14 der Rahmenvielecke 20, 22, 24 der integralen Rahmenstruktur 10 gebildet. Zudem werden sie innerhalb der integralen Rahmenstruktur 10 durch die Balkenelemente 14 gestützt und miteinander verbunden. Nach außen werden der innere $R_i$ und der äußere Rand $R_a$ durch bevorzugt krümmungsstetig verlaufende Randflächen begrenzt, die parallel zur Tiefenrichtung angeordnet sind.

Es ist ebenfalls denkbar, hier tangentenstetig verlaufende Randflächen zu nutzen.

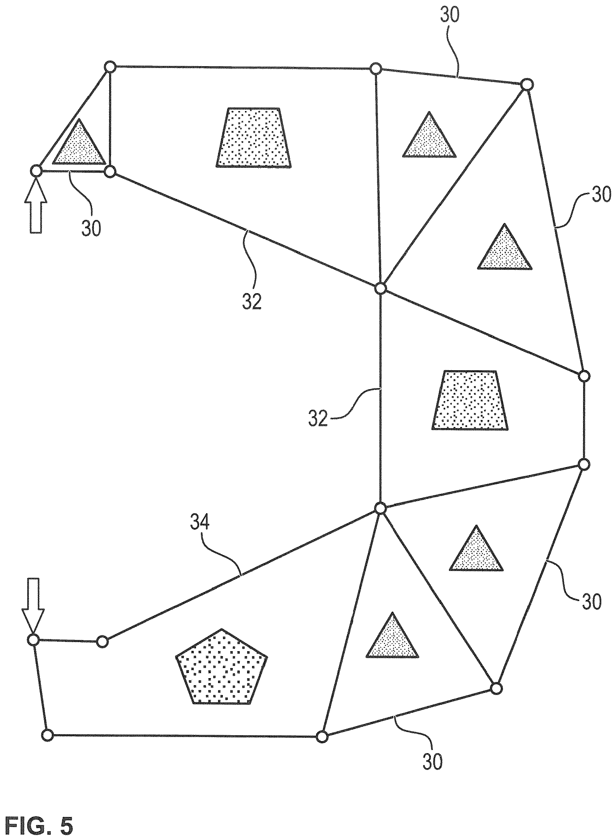

Zum Aufbau des Werkzeughalters 1 werden die Rahmenvielecke 20, 22, 24 zunächst durch Rahmenpolygone 30, 32, 34 definiert. Die Rahmenpolygone 30, 32, 34 weisen je nach bevorzugter Ausführungsform der Erfindung drei Ecken und drei Seiten (siehe Bezugszeichen 30), vier Ecken und vier Seiten (siehe Bezugszeichen 32), fünf Ecken und fünf Seiten (siehe Bezugszeichen 34) oder mehr auf. Die Eckpunkte der Rahmenpolygone sind in den Kreuzungen 12 miteinander verbunden. Der oben beschriebene bevorzugte Aufbau der Schenkel 3, 5, 7 aus den Rahmenpolygonen 30, 32, 34 ist in Figur 5 veranschaulicht.

Zur optimalen Steuerung des Verformungsverhaltens wird die Grundstruktur des C-Rahmens aus einer Kombination aus benachbarten Polygonen zusammengesetzt. Es entsteht ein Stabwerk. Die Polygone haben entweder 3, 4 oder 5 Eckpunkte. In den Auslegern des C-Rahmens werden zur Steuerung des Aufbiegungsverhaltens bevorzugt Vierecke oder Fünfecke eingesetzt. Im Mittelbereich des C-Rahmens wird ein zentrales Rahmenviereck genutzt.

Bei dieser Konstruktion des Werkzeughalters 1 orientiert sich die Erfindung bevorzugt am Vorbild der Natur, wo belastete Bereiche in Knotenpunkten von Fachwerken (bspw. Astgabeln) als eine krümmungsstetige Kurve mit veränderlicher Krümmung gestaltet sind. Daher werden vorzugsweise die Übergangsbereiche zwischen zwei benachbarten Balkenelementen 14 mit periodischen, krümmungsstetigen NURBS Kurven 4. Ordnung mit veränderlicher Krümmung gestaltet, die den Spannungsverlauf der Balkenelemente 14 in der Nähe der Kreuzung 12 optimal über den Bereich der Gabelung verteilen und Spannungsspitzen im Übergangsbereich vermeiden.

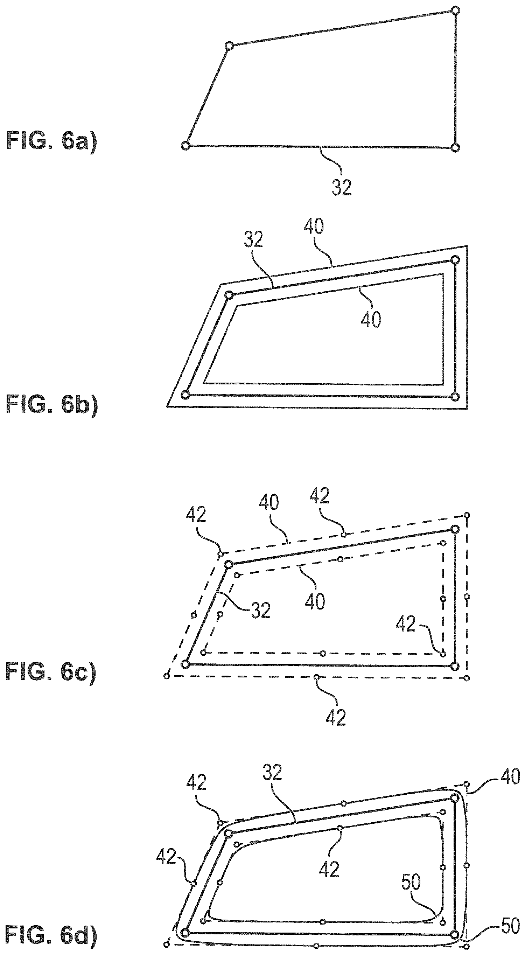

Zur weiteren Konstruktion des Werkzeughalters 1 wird auf das viereckige Rahmenpolygon 32 gemäß Figur 6a Bezug genommen. Dieses steht beispielgebend für die weitere Gestaltung der Rahmenpolygone 30, 32, 34 in der integralen Rahmenstruktur 10.

Die Rahmenpolygone 30, 32, 34 einer Grundstruktur gemäß Figur 5 werden durch Offsetberechnungen der einzelnen Kanten entsprechend einer Zielstärke der späteren Balkenelemente 14 abgesetzt. Dadurch entstehen die Offsetpolygone 40, die grob die Materialkontur der späteren Balkenelemente 40 der integralen Rahmenstruktur vorgeben (siehe Figur 6b).

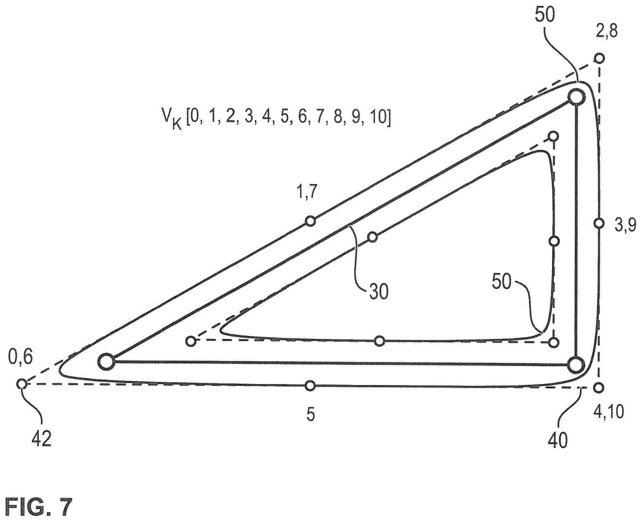

Auf den Offsetpolygonen 40 werden die Knotenpunkte 42 auf den Kantenmitten und an den Eckpunkten der Offsetpolygone 40 erzeugt. Diese dienen als Knotenpunkte 42 für die NURBS-Kurven 50. Auf Basis der Knotenpunkte 42 werden periodische NURBS-Kurven 4. Ordnung erzeugt, die am Bezugszeichen 50 dargestellt sind und den Anforderungen an die Krümmungsstetigkeit genügen. Auf diese Weise optimierte Rahmenstrukturen 10 weisen gegenüber dem Stand der Technik neben einer Reduktion der Belastung durch mechanische Spannungen zusätzliche Gewichtsvorteile auf, da das eingesetzte Material optimal verteilt wird. Bezug nehmend auf Figur 6d zeigt die Figur 7 eine vergrößerte Darstellung der Berechnung der integralen Rahmenstruktur 10.

Die oben genannte NURBS-Kurve $C(u)$ ist allgemein bekannt und definiert durch den Grad $k$, hier bevorzugt 3. Grades, ihrer Basispolynome (= *Ordnung p* der NURBS-Kurve - 1), eine Menge $\mathbb{P}$ gewichteter ($w_i$) Kontrollpunkte $P_i$ und einen Knotenvektor $U$. NURBS-Kurven und -Flächen sind Verallgemeinerungen von sowohl B-Splines als auch Bezierkurven und -flächen. Der hauptsächliche Unterschied zu diesen beiden Splinearten ist die Gewichtung der Kontrollpunkte mit den Gewichten $w_i$. Durch die $w_i$ werden NURBS-Kurven rational.

Die NURBS-Kurve ist über die Summe der mit rationalen B-Spline-Basisfunktionen gewichteten $R_{i,k}$ Kontrollpunkte $P_i$, also über die Formel

$$C(u) = \sum_{i=0}^{n} R_{i,k}(u)P_i$$

vollständig definiert. Die rationale B-Spline-Basisfunktion errechnet sich aus B-Spline-Basisfunktionen $N_{i,k}$ des Grads der Basispolynome $k$, hier bevorzugt 3, und den zu den Kontrollpunkten zugehörigen Gewichten $w_i$ zu

$$R_{i,k}(u)P_i = \frac{N_{i,k}(u)w_i}{\sum_{j=0}^{n} N_{j,k}(u)w_j}$$

Der Parameter $u \in [a, b]$ schaltet im Bereich des Knotenvektors

$$V_K = \{\underbrace{a_{(0)}, \ldots, a_{(p-1)}}_{p}, u_p, \ldots, u_n, \underbrace{b_{(n+1)}, \ldots, b_{(n+p)}}_{p}\}$$

die einzelnen Segmente der Spline-Kurve aktiv. Die Elemente des Knotenvektors $V_K$ sind monoton steigend, wobei alle $a_{(i)} = a_{(j)}$ sowie alle $b_{(i)} = b_{(j)}$ sind.

Ähnliche Berechnungen sind für NURBS-Flächen gemäß den folgenden Formeln durchführbar:

$$S(u, v) = \sum_{i=0}^{n} \sum_{j=o}^{n} R_{i,j}(u, v)P_{i,j}$$

$$R_{i,j}(u, v) = \frac{N_{i,p}(u)N_{j,q}(v)w_{i,j}}{\sum_{k=0}^{n} \sum_{l=0}^{m} N_{k,p}(u)N_{l,q}(v) w_{k,l}}$$

Vorzugsweise wird das oben beschriebene Konstruktionsverfahren rechnergestützt, also mit Hilfe eines geeigneten Softwareprogramms, durchgeführt. Derartige Softwareprogramme sind unter dem Begriff CAD-Programm allgemein bekannt und ein gängiges Werkzeug in der Konstruktionstechnik. Derartige Softwareprogramme und deren rechnergestützte umsetzenden Systeme realisieren bevorzugt sämtliche rechnerunterstützten Tätigkeiten in einem Konstruktionsprozess. Zu ihnen zählt eine geometrische Modellierung, das oben beschriebene Berechnen, ein Simulieren des integralen Werkzeughalters 1. Zudem wird bevorzugt ein Konstruktionsdatensatz erstellt und an die Herstellung bzw. Fertigung übergeben. Dies sind beispielsweise CNC-Maschinen, die den rechnergestützten Datensatz in ein Produkt umsetzen. In ähnlicher Weise ist das Ergebnis des erfindungsgemäßen Konstruktionsverfahrens auch in eine Fertigungszeichnung umsetzbar. Somit umfasst vorliegende Erfindung ebenfalls die Herstellung des Werkzeughalters 1 basierend auf dem rechnergestützt umgesetzten obigen Konstruktionsverfahren.

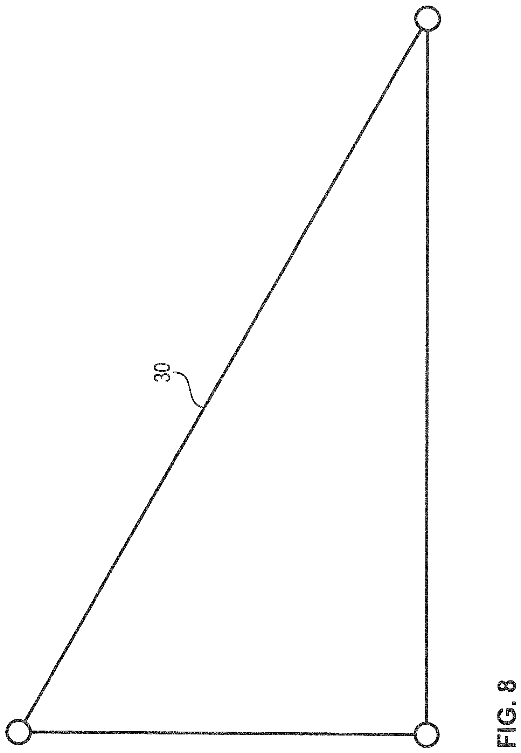

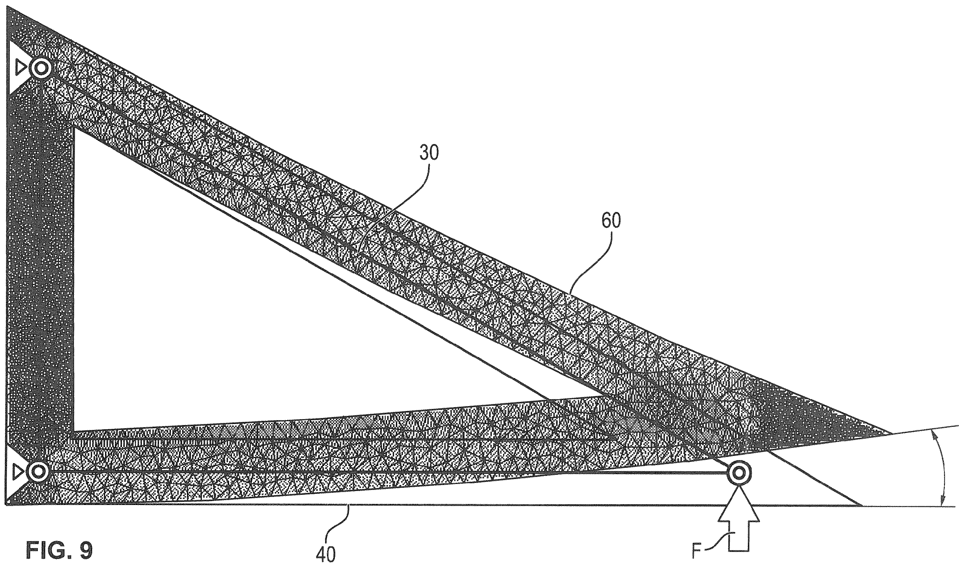

In Figur 8 ist ein Rahmenpolygon 30 mit drei Ecken gezeigt. Um ein Rahmendreieck 20 zu erhalten, wurde das Rahmenpolygon 30 mit der Offsetkontur 40 umgeben (siehe oben). Wird dieses Rahmendreieck 20 gemäß Figur 9 durch eine Kraft F belastet, wird dadurch in dem belasteten Eckbereich ein winkliges Aufbiegen erzeugt. Dies ist durch den Pfeil in Figur 9 angedeutet.

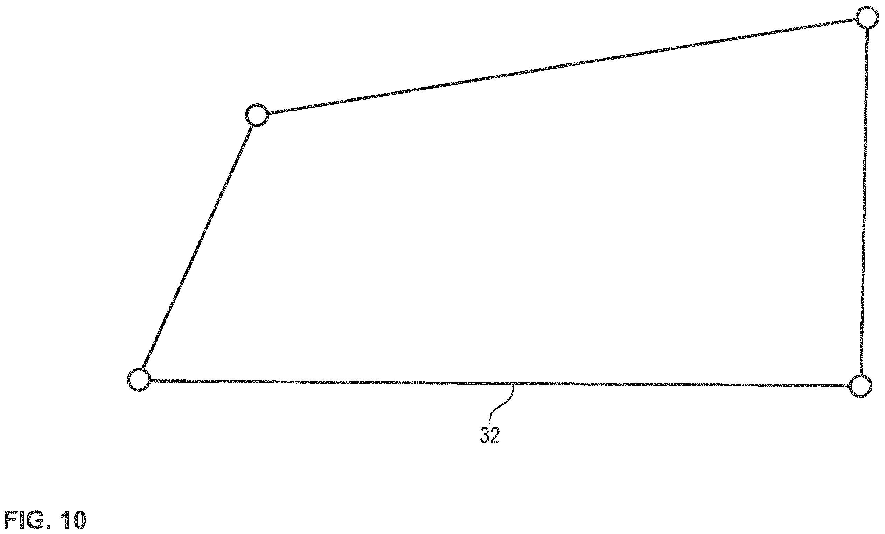

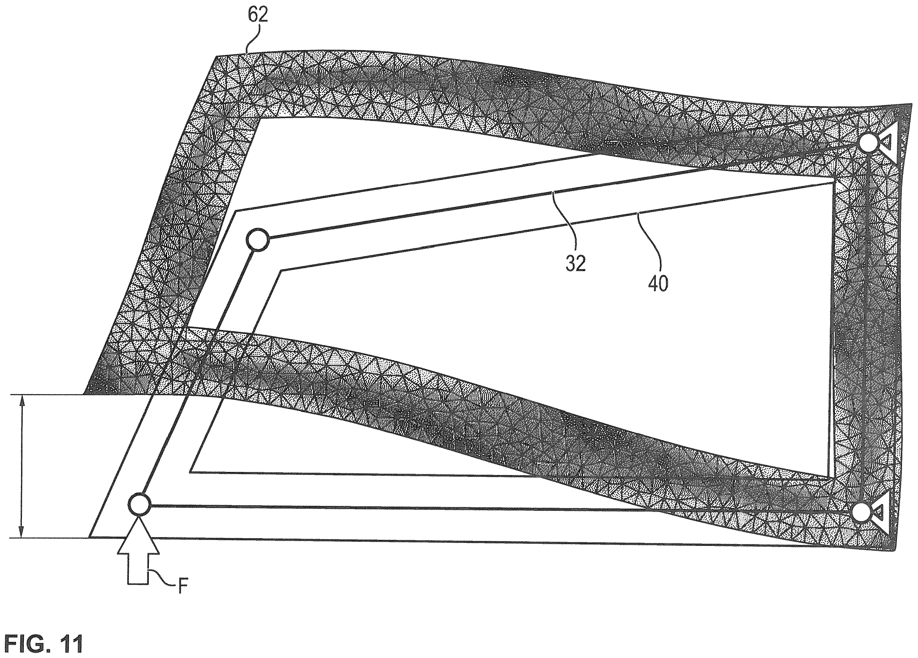

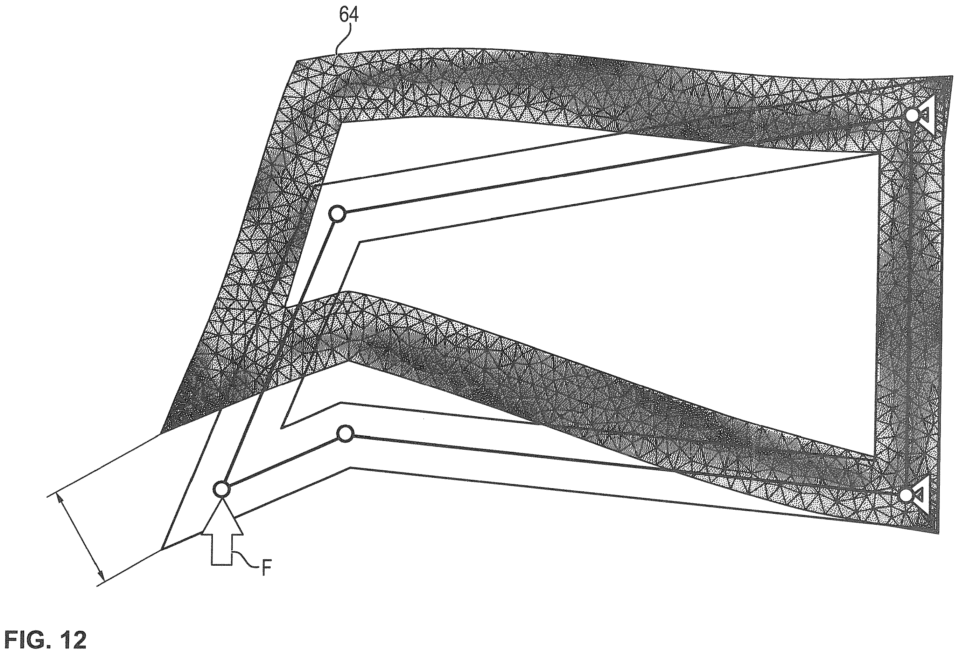

Eine ähnliche Betrachtung an einem Rahmenviereck 22 (siehe Figur 10) oder einem Rahmenfünfeck führt zu einer parallelen Aufbiegung bei einer mechanischen Belastung eines Eckbereichs. Dies ist in den Figuren 11 und 12 durch eine mechanische Belastung mit der Kraft F veranschaulicht. Diese Belastung F greift an der unteren linken Ecke des Rahmenvierecks 22 in Figur 11 und des Rahmenfünfecks 24 in Figur 12 an.

Aus dieser Betrachtung folgt, dass basierend auf der geeigneten Wahl eines Rahmenvierecks 22 oder eines Rahmenfünfecks 24 anstelle eines Rahmendreiecks 20 die Verformung der integralen Rahmenstruktur 10 unter Last hin zu einer parallelen Aufbiegung gezielt eingestellt werden kann. Daher ist es bevorzugt, Rahmenvierecke 22 in den Auslegern des C-förmigen Werkzeughalters 1, also im ersten 3 und im zweiten Schenkel 5, einzusetzen.

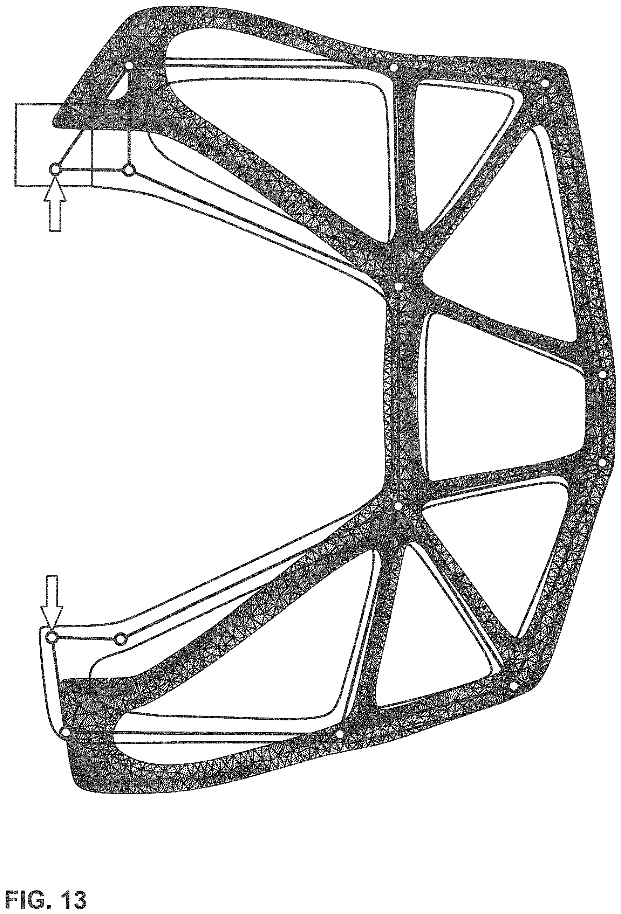

Diese Einstellung des gezielten parallelen Aufbiegens des Werkzeughalters 1 unter mechanischer Belastung ist in Figur 13 veranschaulicht. Hier zeigt der Unterschied der aus Rahmenpolygonen 30, 32, 34 konstruierten Rahmenstruktur im nicht belasteten Zustand zur parallel ausgelenkten integralen Rahmenstruktur 10 die gezielt beeinflusste Verformung des Werkzeughalters 1 durch die Kraft F an.

## Bezugszeichenliste

| | |
|---|---|
| 1 | Werkzeughalter |
| 3, 5 | erster und zweiter Schenkel |
| 7 | Verbindungsschenkel |
| 10 | integrale Rahmenstruktur |
| 12 | Kreuzung |
| 14 | Balkenelement |
| 16 | Freiraum |
| 20 | Rahmendreieck |
| 22 | Rahmenviereck |
| 24 | Rahmenfünfeck |
| 30 | Rahmenpolygon mit drei Ecken |
| 32 | Rahmenpolygon mit vier Ecken |
| 34 | Rahmenpolygon mit fünf Ecken |
| 40 | Offsetpolygon |
| 42 | Knotenpunkt |
| 50 | NURBS-Kurve |
| 60 | belastete Rahmenstruktur |
| L | Länge |
| B | Breite |
| T | Tiefe des Balkenelements 14 |

## Patentansprüche

1. Ein C-förmiger Werkzeughalter (1) bestehend aus einer integralen Rahmenstruktur (10), die durch einen inneren und einen äußeren jeweils C-förmigen Rand begrenzt ist, in der die C-förmigen Ränder über mindestens fünf in die Rahmenstruktur (10) integrierte Rahmenvielecke, insbesondere Dreiecke (20), Vierecke (22) und Fünfecke (24), aufgebaut und miteinander verbunden sind, **dadurch gekennzeichnet, dass** jeweils eine Innenseite der einzelnen Rahmenvielecke eine krümmungsstetig umlaufende Verbindungsfläche entlang der Seiten des jeweiligen Rahmenvielecks darstellt und der innere und der äußere C-förmige Rand nach außen jeweils durch eine krümmungsstetig verlaufende Randfläche begrenzt ist.

2. Werkzeughalter (1) gemäß Anspruch 1, dessen C-Form aus einem ersten (3) und einem zweiten einander gegenüberliegend angeordneten Schenkel (5) und einem Verbindungsschenkel (7) besteht, wobei der Verbindungsschenkel (7) den ersten (3) und den zweiten Schenkel (5) zur Ausbildung einer C-Form miteinander verbindet.

3. Werkzeughalter (1) gemäß Anspruch 2, dessen Verbindungsschenkel (7) aus mindestens zwei Rahmendreiecken (20) und einem Rahmenvieleck und dessen erster (3) und dessen zweiter Schenkel (5) jeweils aus mindestens einem Rahmenvieleck bestehen.

4. Werkzeughalter (1) gemäß Anspruch 2 oder 3, dessen Verbindungsschenkel (7) aus mindestens vier Rahmendreiecken (20) und einem Rahmenviereck (22) und dessen erster (3) und dessen zweiter Schenkel (5) jeweils aus mindestens einem Rahmenviereck (22) oder einem Rahmenfünfeck (24) bestehen.

5. Werkzeughalter (1) gemäß Anspruch 3 oder 4, dessen Rahmenvielecke jeweils eine Fläche einschließen, die von einer Balkenstruktur mit einer Tiefe (T) und einer Breite (B) umgeben ist, deren Tiefe (T) orthogonal zur Fläche und deren Breite (B) parallel zur Fläche definiert sind, wobei die gegenüber voneinander angeordneten, um die Breite (B) der Balkenstruktur voneinander beabstandeten und parallel zur Tiefe (T) verlaufenden Tiefenflächen der Rahmenvielecke krümmungsstetig verlaufende Rahmenflächen bilden.

6. Werkzeughalter (1) gemäß Anspruch 5, dessen Tiefenflächen in Tiefenrichtung betrachtet eine innere und eine äußere Konturlinie pro Rahmenvieleck bilden, die jeweils als eine periodische NURBS Kurve vierter Ordnung auf Grundlage einer Mehrzahl von erzeugten Knotenpunkten (42) zumindest in Eckbereichen des jeweiligen Rahmenvielecks definiert sind.

7. Werkzeughalter (1) gemäß einem der vorhergehenden Patentansprüche 2-5, in dem der erste (3) und der zweite Schenkel (5) jeweils ein freies Ende aufweist, wobei an mindestens einem Ende eine Antriebseinheit oder eine Befestigungseinheit integral oder modular vorgesehen ist.

8. Werkzeughalter (1) gemäß einem der vorhergehenden Patentansprüche, der integral aus Metall, insbesondere Stahl oder Aluminium, oder aus einem hybriden faserverstärkten Kunststoff (FVK) oder einem Faser-Kunststoff-Verbund (FKV) hergestellt ist.

9. Fügegerät, insbesondere ein Nietsetzgerät, das einen C-förmigen Werkzeughalter (1) gemäß einem der vorhergehenden Patentansprüche 1-8 mit einer Antriebseinheit und einem Gegenlager, insbesondere eine Matrize, aufweist.

10. Konstruktionsverfahren eines C-förmigen Werkzeughalters (1) mit einer integralen Rahmenstruktur (10), die durch einen inneren und einen äußeren jeweils C-förmigen Rand begrenzt ist, insbesondere eines C-förmigen Werkzeughalters (1) gemäß einem der Patentansprüche 1-8, mit den folgenden Schritten:

a. Definieren eines ersten (3) und eines zweiten Schenkels (5), die einander gegenüberliegend angeordnet über einen Verbindungsschenkel (7) miteinander verbunden sind, um eine C-förmige Struktur zu bilden,
b. Bilden des ersten (3) und des zweiten Schenkels (5) sowie des Verbindungsschenkels (7) aus mindestens fünf, vorzugsweise sieben, Rahmenvielecken, die miteinander verbunden sind, und
c. Ausbilden eines C-förmigen äußeren Rands und eines C-förmigen inneren Rands des Werkzeughalters (1) bestehend aus den miteinander verbundenen Rahmenvielecken mit einer krümmungsstetig verlaufenden C-förmigen äußeren Randfläche und einer krümmungsstetig verlaufenden C-förmigen inneren Randfläche sowie
d. Ausbilden der einzelnen Rahmenvielecke jeweils mit einer krümmungsstetig verlaufenden inneren Rahmenfläche.

11. Konstruktionsverfahren gemäß Anspruch 10, mit den weiteren Schritten:

Definieren jedes Rahmenvielecks in einer gemeinsamen Konstruktionsebene als Rahmenpolygon (30, 32, 34) und
Definieren einer Offsetkontur innerhalb der Konstruktionsebene, die beidseitig von dem Rahmenpolygon (30, 32, 34) beabstandet ist, so dass die Offsetkontur eine Breite des Rahmenvielecks innerhalb der Konstruktionsebene bestimmt und sich aus zwei Offsetpolygonen (40) zusammensetzt.

**12.** Konstruktionsverfahren gemäß Anspruch 11, in dem die Breite der Offsetkontur an den einzelnen Seiten des Rahmenpolygons (30, 32, 34) gleich oder verschieden ist.

**13.** Konstruktionsverfahren gemäß Anspruch 11 oder 12, mit den weiteren Schritten:

Erzeugen von Knotenpunkten (42) auf den Ecken und auf den Seitenmitten der Offsetpolygone (40) und Erzeugen von periodischen NURBS Kurven (50) vierter Ordnung bestehend aus Polynomen dritten Grades auf Grundlage der erzeugten Knotenpunkte (42).

**14.** Konstruktionsverfahren gemäß einem der Patentansprüche 10 bis 13 mit dem weiteren Schritt, rechnergestütztes Umsetzen des Konstruktionsverfahrens, vorzugsweise mit einem CAD Programm, und Erstellen eines rechnergestützten Datensatzes zur Herstellung des Werkzeughalters (1).

**15.** Herstellungsverfahren eines C-förmigen Werkzeughalters (1) gemäß einem der Patentansprüche 1-8 mit einer integralen Rahmenstruktur (10), das die folgenden Schritte aufweist:

a. Empfangen eines rechnergestützten Datensatzes für den herzustellenden C-förmigen Werkzeughalter (1) aus einem CAD-System, vorzugsweise als Ergebnis des Konstruktionsverfahrens gemäß Anspruch 14,
b. Weiterleiten des rechnergestützten Datensatzes an eine Produktionsmaschine, vorzugsweise ein CNC-Maschine oder ähnliches, und
c. Herstellen und Nachbearbeiten des C-förmigen Werkzeughalters (1) gemäß dem rechnergestützten Datensatz.

**Claims**

**1.** A C-shaped tool holder (1) consisting of an integral frame structure (10) that is delimited by an inner and an outer edge, each C-shaped, in which the C-shaped edges are made from and connected to each other by at least five multiple-vertex frame bodies that are integrated into the frame structure (10), in particular triangles (20), quadrilaterals (22) and pentagons (24), **characterized in that** an inner side of the individual multiple-vertex frame bodies is each a connecting surface extending with a continuity of curvature along the circumferential direction, along the sides of the respective multiple-vertex frame body, and the inner and the outer C-shaped edge is each delimited to the outside by an edge surface extending with a continuity of curvature.

**2.** Tool holder (1) according to claim 1, the C-shape of which consists of a first (3) and a second leg (5) arranged opposite each other and a connecting leg (7), wherein the connecting leg (7) connects the first (3) and the second leg (5) to each other to form a C-shape.

**3.** Tool holder (1) according to claim 2, the connecting leg (7) of which consists of at least two frame triangles (20) and one multiple-vertex frame body, and the first (3) and second leg (5) of which each consists of at least one multiple-vertex frame body.

**4.** Tool holder (1) according to claim 2 or 3, the connecting leg (7) of which consists of at least four frame triangles (20) and one frame quadrilateral (22), and the first (3) and second leg (5) of which each consists of at least one frame quadrilateral (22) or one frame pentagon (24).

**5.** Tool holder (1) according to claim 3 or 4, the multiple-vertex frame bodies of which each enclose a surface that is surrounded by a bar structure with a depth (T) and a width (B), the depth (T) of which is defined orthogonally to the surface and the width (B) of which is defined parallel to the surface, wherein the depth surfaces of the multiple-vertex frame bodies, which are arranged opposite each other, which are spaced apart from each other by the width (B) of the bar structure and which run parallel to the depth (T), form frame surfaces extending with a continuity of curvature.

**6.** Tool holder (1) according to claim 5, the depth surfaces of which, considered in the depth direction, form an inner and an outer contour line per multiple-vertex frame body that are each defined as a periodic fourth order NURBS curve on the basis of a plurality of generated junction points (42) at least in corner areas of the respective multiple-vertex frame body.

7. Tool holder (1) according to one of the preceding claims 2 - 5 in which the first (3) and the second leg (5) each has a free end, wherein a drive unit or a fixing unit is provided integrally or modularly on at least one end.

8. Tool holder (1) according to one of the preceding claims that is produced integrally from metal, in particular steel or aluminum, or from a hybrid fiber-reinforced plastic (FRP) or a fiber-plastic composite (FPC).

9. Joining device, in particular a rivet setting device, that has a C-shaped tool holder (1) according to one of the preceding claims 1 - 8 with a drive unit and a counter bearing, in particular a die.

10. Construction method of a C-shaped tool holder (1) with an integral frame structure (10) that is delimited by an inner and an outer edge, each C-shaped, in particular of a C-shaped tool holder (1) according to one of the claims 1-8, with the following steps:

   a. defining a first (3) and a second leg (5) that are arranged opposite each other and are connected with each other via a connecting leg (7) to form a C-shaped structure,
   b. forming the first (3) and the second leg (5) as well as the connecting leg (7) from at least five, preferably seven, multiple-vertex frame bodies that are connected to each other, and
   c. forming a C-shaped outer edge and a C-shaped inner edge of the tool holder (1) consisting of the interconnected multiple-vertex frame bodies having a C-shaped outer edge surface extending with a continuity of curvature and a C-shaped inner edge surface extending with a continuity of curvature, as well as
   d. forming the individual multiple-vertex frame bodies each with an inner frame surface extending with a continuity of curvature.

11. Construction method according to claim 10 with the further steps:

   defining each multiple-vertex frame body in a common construction plane as a frame polygon (30, 32, 34) and defining an offset contour within the construction plane that is spaced apart on both sides from the frame polygon (30, 32, 34) so that the offset contour determines a width of the multiple-vertex frame body within the construction plane and is composed of two offset polygons (40).

12. Construction method according to claim 11 in which the width of the offset contour on the individual sides of the frame polygon (30, 32, 34) is the same or different.

13. Construction method according to claim 11 or 12 with the further steps:

   Generating junction points (42) on the corners and on the middle of the sides of the offset polygons (40) and Generating periodic fourth order NURBS curves (50) consisting of third-degree polynomials on the basis of the generated junction points (42).

14. Construction method according to one of the claims 10 to 13 with the further step of computer-based implementing of the construction method, preferably with a CAD program, and creating a computer-based data set for producing the tool holder (1).

15. Production method of a C-shaped tool holder (1) according to one of the claims 1-8 with an integral frame structure (10), having the following steps:

   a. receiving a computer-based data set from a CAD system for the C-shaped tool holder (1) to be produced, preferably as the result of the construction method according to claim 14,
   b. forwarding the computer-based data set to a production machine, preferably a CNC machine or similar, and
   c. producing and post-processing the C-shaped tool holder (1) according to the computer-based data set.

**Revendications**

1. Porte-outil en forme de C (1) constitué d'une structure de cadre intégrale (10) délimitée par un bord intérieur et un bord extérieur respectivement en forme de C, dans laquelle les bords en forme de C sont réalisés et reliés entre eux par le biais d'au moins cinq polygones de cadre intégrés dans la structure de cadre (10), en particulier de triangles (20), de quadrilatères (22) et de pentagones (24), **caractérisé en ce qu'**un côté intérieur des différents polygones de cadre représente respectivement une surface d'assemblage circonférentielle à courbure constante le long des côtés du polygone de cadre respectif et le bord intérieur et le bord extérieur en forme de C sont respectivement délimités vers l'extérieur par une surface de cadre s'étendant avec une courbure constante.

2. Porte-outil (1) selon la revendication 1, dont la forme en C est constituée d'une première (3) et d'une deuxième branche (5) disposées de façon opposée l'une par rapport à l'autre ainsi que d'une branche d'assemblage (7), dans lequel la branche d'assemblage (7) relie entre elles la première (3) et la deuxième branche (5) pour créer une forme en C.

3. Porte-outil (1) selon la revendication 2, dont la branche d'assemblage (7) est constituée d'au moins deux triangles de cadre (20) et d'un polygone de cadre et dont la première (3) et la deuxième branche (5) sont constituées respectivement d'au moins un polygone de cadre.

4. Porte-outil (1) selon la revendication 2 ou 3, dont la branche d'assemblage (7) est constituée d'au moins quatre triangles de cadre (20) et d'un quadrilatère de cadre (22) et dont la première (3) et la deuxième branche (5) sont constituées respectivement d'au moins un quadrilatère de cadre (22) ou d'un pentagone de cadre (24).

5. Porte-outil (1) selon la revendication 3 ou 4, dont les polygones de cadre incluent respectivement une surface entourée par une structure de poutre avec une profondeur (T) et une largeur (B), dont la profondeur (T) est définie orthogonalement à la surface et dont la largeur (B) est définie parallèlement à la surface, dans lequel les surfaces de profondeur des polygones de cadre disposées de façon opposée les unes par rapport aux autres, espacées les unes des autres selon la largeur (B) de la structure de poutre et s'étendant parallèlement à la profondeur (T), forment des surfaces de cadre s'étendant avec une courbure constante.

6. Porte-outil (1) selon la revendication 5, dont les surfaces de profondeur, vues dans le sens de la profondeur, forment des lignes de contour intérieures et extérieures de chaque polygone de cadre, lesquelles sont définies respectivement comme une courbe NURBS périodique de quatrième ordre sur la base d'une pluralité de points d'interconnexion générés (42) au moins dans des régions de coin du polygone de cadre respectif.

7. Porte-outil (1) selon l'une des revendications précédentes 2 à 5, dans lequel la première (3) et la deuxième branche (5) présentent respectivement une extrémité libre, dans lequel une unité d'entraînement ou une unité de fixation est prévue de façon intégrale ou modulaire à au moins une extrémité.

8. Porte-outil (1) selon l'une des revendications précédentes, lequel est réalisé en métal, en particulier en acier ou en aluminium, ou à partir d'une matière plastique hybride renforcée par des fibres (FVK) ou d'un matériau composite à base de plastique et de fibres (FKV).

9. Appareil d'assemblage, en particulier un appareil de rivetage, lequel présente un porte-outil en forme de C (1) selon l'une des revendications précédentes 1 à 8 avec une unité d'entraînement et un contre-appui, en particulier une matrice.

10. Méthode de construction d'un porte-outil en forme de C (1) avec une structure de cadre intégrale (10) délimitée par un bord intérieur et un bord extérieur respectivement en forme de C, en particulier d'un porte-outil en forme de C (1) selon l'une des revendications 1 à 8, comprenant les étapes suivantes :

   a. définition d'une première (3) et d'une deuxième branche (5) disposées de façon opposée l'une par rapport à l'autre et reliées entre elles par le biais d'une branche d'assemblage (7), de manière à former une structure en forme de C,
   b. formation de la première (3) et de la deuxième branche (5) ainsi que d'une branche d'assemblage (7) à partir d'au moins cinq, de préférence sept, polygones de cadre reliés entre eux, et
   c. formation d'un bord extérieur en forme de C et d'un bord intérieur en forme de C du porte-outil (1) constitué des polygones de cadre reliés entre eux avec une surface de bord extérieure en forme de C s'étendant avec une courbure constante et une surface de bord intérieure en forme de C s'étendant avec une courbure constante, et
   d. formation des différents polygones de cadre respectivement avec une surface de cadre intérieure s'étendant avec une courbure constante.

11. Méthode de construction selon la revendication 10, comprenant les étapes supplémentaires suivantes :

- définition de chaque polygone de cadre dans un plan de construction commun en tant que polygone de cadre (30, 32, 34) et
- définition d'un contour décalé à l'intérieur du plan de construction, le contour décalé étant espacé de part et d'autre du polygone de cadre (30, 32, 34), de sorte que le contour décalé détermine une largeur du polygone de cadre à l'intérieur du plan de construction et se compose de deux polygones décalés (40).

**12.** Méthode de construction selon la revendication 11, dans laquelle la largeur du contour décalé est identique ou différente sur les différents côtés du polygone de cadre (30, 32, 34).

**13.** Méthode de construction selon la revendication 11 ou 12, comprenant les étapes supplémentaires suivantes :

- génération de points d'interconnexion (42) au niveau des coins et des milieux de côtés des polygones décalés (40) et
- génération de courbes NURBS périodiques (50) de quatrième ordre, constituées de polynômes de troisième ordre, sur la base des points d'interconnexion générés (42).

**14.** Méthode de construction selon l'une des revendications 10 à 13, comprenant l'étape supplémentaire de mise en œuvre assistée par ordinateur de la méthode de construction, de préférence avec un programme CAO, et de création d'un jeu de données assisté par ordinateur pour la fabrication du porte-outil (1).

**15.** Méthode de fabrication d'un porte-outil en forme de C (1) selon l'une des revendications 1 à 8 avec une structure de cadre intégrale (10), présentant les étapes suivantes :

a. réception d'un jeu de données assisté par ordinateur pour le porte-outil en forme de C (1) à fabriquer, à partir d'un système CAO, en particulier, en résultat de la méthode de construction selon la revendication 14,
b. transmission du jeu de données assisté par ordinateur à une machine de production, en particulier une machine CNC ou similaire, et
c. fabrication et traitement consécutif du porte-outil en forme de C (1) conformément au jeu de données assisté par ordinateur.

FIG. 1

FIG. 2

FIG. 3

FIG. 4

FIG. 5

FIG. 6a)

FIG. 6b)

FIG. 6c)

FIG. 6d)

FIG. 7

FIG. 8

FIG. 9

**FIG. 10**

FIG. 11

FIG. 12

FIG. 13

FIG. 14a)

EP 3 403 741 B1

300 MPa

14

14

12

FIG. 14b)

**IN DER BESCHREIBUNG AUFGEFÜHRTE DOKUMENTE**

**In der Beschreibung aufgeführte Patentdokumente**

- KR 20080110364 A
- DE 69911040 T2